# EUROPEAN PATENT SPECIFICATION

(11) **EP 0 729 494 B1**
(45) Date of publication and mention of the grant of the patent: **12.08.1998**
(21) Application number: 94930619.5
(22) Date of filing: 05.10.1994
(51) Int. Cl.: C08F 283/10, C09J 4/06

(54) **PRESSURE SENSITIVE THERMOSETTING ADHESIVES**
DRUCKEMPFINDLICHE WAERMEHAERTBARE KLEBSTOFFE
ADHESIFS AUTOCOLLANTS THERMODURCISSABLES

(30) Priority: 10.11.1993 US 150417
(43) Date of publication of application: 04.09.1996
(73) Proprietor: MINNESOTA MINING AND MANUFACTURING COMPANY, St. Paul, Minnesota 55133-3427 (US)
(72) Inventor: BENNETT, Greggory, S., Saint Paul, MN 55133-3427 (US); HAAK, Christopher, A., Saint Paul, MN 55133-3427 (US); GUSTAFSON, Craig, A., Saint Paul, MN 55133-3427 (US)
(74) Representative: Warcoin, Jacques
(86) International application number: US9411331
(87) International publication number: WO9513328

(56) References cited:
- EP-A- 0 386 909
- US-A- 5 086 088

## Description

### Background of the Invention

### Field of the Invention

This invention relates to pressure sensitive thermosetting adhesives.

### Description of the Related Art

In the assembly of industrial components, e.g., automobile components and office furniture, a premade component may be bonded by means of a high performance adhesive. Similarly, adjacent structural members may be sealed at their juncture by means of such an adhesive. Useful adhesives must conform to the bonding surfaces, must be initially tacky, and must adhere to substrates such as electron-deposited paint surfaces and oily metal.

Further, as the material may be applied to the structural member prior to heating in a paint curing oven or metal cleaning operation, it must demonstrate high temperature resistance and high adhesion. Ideally, the adhesive would be initially pressure sensitive and would cure upon exposure to temperatures normally used in a paint curing oven or metal cleaning operation, thereby permanently bonding the component to the structural member, or sealing a seam between adjacent structural members, yet remaining durable.

Kitano et al., U.S. Patent No. 5,086,088 describes pressure sensitive thermosetting adhesives for use, e.g., in automotive applications. These adhesives are a blend of an aromatic epoxy resin and a photopolymerizable prepolymeric or monomeric syrup containing an acrylic ester of a non tertiary alcohol and a copolymerizable moderately polar monomer.

### Summary of the Invention

In general, the invention features a pressure sensitive thermosetting adhesive that is the polymerization product of a blend that includes:
(a) a polymerizable monomeric or prepolymeric syrup that includes:
   (i) 10-80 parts by weight of an acrylic acid ester of a monohydric alcohol whose homopolymer has a T_{g} less than 0°C;
   (ii) 20-90 parts by weight of a non-polar ethylenically unsaturated monomer whose homopolymer has a solubility parameter of no greater than 10.50 and a T_{g} greater than 15°C; and
   (iii) 0-5 parts by weight of a polar ethylenically unsaturated monomer whose homopolymer has a solubility parameter of greater than 10.50 and a T_{g} greater than 15°C; and
(b) one or more thermosetting resins.

The solubility parameter referred to herein is calculated according to the technique described in Fedors, Polym. Eng. and Sci., 14:147 (1974). A monomer whose homopolymer has a solubility parameter of greater than 10.50 when measured according to the Fedors technique is referred to herein as a polar monomer, whereas a monomer whose homopolymer has a solubility parameter of 10.50 or less when measured according to the Fedors technique is referred to herein as a non-polar monomer.

The term "thermosetting" means that the adhesive may be cured by application of heat to a final state of increased strength in which the adhesive does not flow.

The terms "cure," "cured," "uncured," and the like relate to the status of the thermosetting resin and are not used to refer to the polymerization or crosslinking of the acrylic polymer portion of the adhesive.

In preferred embodiments, the thermosetting resin is miscible in the polymerization product of the acrylic acid ester, non-polar ethylenically unsaturated monomer, and polar ethylenically saturated monomer. By "miscible" it is meant that the final pressure sensitive adhesive does not exhibit macroscopic phase separation as evidenced by optical clarity at room temperature in the absence of fillers or curatives.

An example of a preferred thermosetting resin is an epoxy resin, e.g., an epoxy resin with aliphatic character. By "aliphatic" it is meant that the epoxy contains a sufficient quantity of aliphatic portions such that it is soluble in the final acrylate polymer. An example of a preferred epoxy resin with aliphatic character is a hydrogenated bisphenol A epoxy resin.

Incorporating a non-polar monomer into the acrylic portion of the blend improves adhesion to oily and low energy surfaces. Preferably, the relative amounts of the acrylic acid ester, the non-polar ethylenically unsaturated monomer, and the polar ethylenically unsaturated monomer are chosen such that the 90° peel adhesion of the pressure sensitive adhesive to a surface provided with 1.93 ± 0.77 g/m² (1.25 ± 0.5 mg/in²) oil is greater than zero after a 1 minute dwell at room temperature as measured according to Test Procedure B, infra.

The blend preferably includes from about 15% to about 70% by weight of the thermosetting resin. Other ingredients which may be included in the adhesive composition alone or in combination with each other include photoinitiators (in which case the blend is photopolymerizable), heat-activatable hardeners for the thermosetting resin, and crosslinking agents.

Examples of preferred non-polar ethylenically unsaturated monomers include isobornyl acrylate, N-octyl acrylamide, cyclohexylacrylate, 3,3,5 trimethylcyclohexylacrylate, or combinations thereof, with isobornyl acrylate being particularly preferred. Examples of preferred polar ethylenically unsaturated monomers include acrylic acid, N-vinylcaprolactam, N-vinyl-2-pyrrolidone, or combinations thereof. Examples of preferred acrylic acid esters include isooctyl acrylate, isononyl acrylate, decyl acrylate, lauryl acrylate, butyl acrylate, ethyl hexyl acrylate, hexyl acrylate, octadecyl acrylate, or combinations thereof, with isooctyl acrylate and lauryl acrylate being particularly preferred.

In one example of a preferred composition, the acrylic acid ester is isooctyl acrylate and the non-polar ethylenically unsaturated monomer is isobornyl acrylate. The amount of isooctyl acrylate preferably ranges from 15 to 60 parts, while the amount of isobornyl acrylate preferably ranges from 40 to 85 parts. In another example of a preferred composition, the acrylic acid ester is lauryl acrylate and the non-polar ethylenically unsaturated monomer is isobornyl acrylate. The amount of lauryl acrylate preferably ranges from 15 to 60 parts, while the amount of isobornyl acrylate preferably ranges from 40 to 85 parts.

In other embodiments, the pressure sensitive adhesive may further include a heat expandable thermoplastic microsphere which contains a core material that expands upon heating. Incorporation of such microspheres is particularly desirable where the adhesives are used in transfer tapes where expansion of the tape is desired. Preferably, the core material is an organic substance which has a lower boiling point than the curing temperature of the thermosetting resin.

The invention provides pressure sensitive thermosetting adhesives which, by virtue of incorporating a non-polar ethylenically unsaturated monomer and limiting the polar monomer content to no more than 5 parts, exhibit good adhesion to oily and low energy surfaces, making the adhesives particularly useful in industrial metal bonding applications. The adhesives exhibit good adhesion to high energy surfaces such as stainless steel as well.

The adhesives are less toxic than, e.g., adhesives containing polar heteroatom acrylates. Moreover, the non-polar nature of the adhesives allows them to be cured by either acid or base mechanisms. The flow and hardness properties of the adhesives can be tailored for particular applications.

The adhesives further exhibit good shear properties both at low and high temperatures, particularly when a small amount (no more than 5 parts) of a polar co-monomer is included. Moreover, the adhesives offer the further advantage of reduced sensitivity to moisture and reduced tendency to corrode metals such as copper relative to pressure sensitive adhesives containing higher amounts of polar co-monomers. Furthermore, the adhesives interact to a lesser extent with polar additives (e.g., curatives) compared to pressure sensitive adhesives containing higher amounts of polar co-monomers.

Other features and advantages of the invention will be apparent from the following description of the preferred embodiments thereof, and from the claims.

### Description of the Preferred Embodiments

The thermosetting pressure sensitive adhesives of this invention display good adhesion to both low energy surfaces such as polypropylene, high energy surfaces such as stainless steel, and oily surfaces (e.g., oily metal). Examples of oily surfaces include surfaces provided with mineral oil, emulsion oils, peanut oil, motor oil (e.g., 5W-30), WD40, and Ferricote 61 A US (Quaker Chemical Co.) (a common protectant for cold rolled steel).

The 90° peel adhesion to a surface provided with 1.93 ± 0.77 g/m² (1.25 ± 0.5 mg/in²) of oil after a 1 minute second dwell at room temperature is greater than zero, preferably at least 54.73 N/m (5 oz/0.5 in.), and more preferably at least 109.46 N/m (10 oz./0.5 in.) measured according to Test Procedure B, infra. After a 24 hour dwell, the adhesion preferably builds to at least 109.46 N/m (10 oz/0.5 in.), more preferably to at least 328.38 N/m (30 oz/0.5 in.), and even more preferably to at least 547.3 N/m (50 oz/0.5 in.) measured according to Test Procedure B, infra. These properties are achieved by controlling the monomeric composition to achieve the appropriate polarity (as measured by the solubility parameter of the homopolymers of the individual monomers determined according to the Fedors technique) and rheological properties (T_{g} as measured by the 1 radian/second tan delta maximum temperature of the adhesive polymer).

A list of several common monomers and their respective Fedors' solubility parameters is shown in Table 1. Table 1 is subdivided into four sections: low Tg acrylate monomers, high Tg acrylate monomers, high Tg methacrylate monomers, and vinyl monomers.

**TABLE 1:**

| FEDORS' SOLUBILITY PARAMETERS | |
|---|---|
| Repeat Unit | Solubility Parameter (cal/cm³)^{0.5} corresponding to 2045.5 J/m³. |
| Octadecyl acrylate (ODA) | 8.99 |
| Lauryl acrylate (LA) | 9.15 |
| Iso-octyl acrylate (IOA) | 9.22 |
| 2-ethylhexyl acrylate (2-EHA) | 9.22 |
| Butyl acrylate (BA) | 9.77 |
| Propyl acrylate (PA) | 9.95 |
| Ethyl acrylate (EA) | 10.20 |
| | |
| 3,3,5 trimethylcyclohexyl acrylate (TMCA) | 9.35 |
| Iso-bornyl acrylate (IBA) | 9.71 |
| Cyclohexyl acrylate (CHA) | 10.16 |
| N-octyl acrylamide (NOA) | 10.33 |
| Tetrahydrofurfuryl acrylate (THFA) | 10.53 |
| Methyl acrylate (MA) | 10.56 |
| Glycidyl acrylate (GA) | 11.32 |
| 2-Phenoxyethylacrylate (2-PhEA) | 11.79 |
| N-vinylcaprolactam (NVC) | 12.10 |
| N,N,-Dimethylacrylamide (DMA) | 12.32 |
| N-vinyl-2-pyrrolidone (NVP) | 13.38 |
| Acrylic Acid (AA) | 14.04 |
| | |
| Methylmethacrylate (MMA) | 9.93 |
| Ethylmethacrylate (EMA) | 9.72 |
| Propylmethacrylate (PMA) | 9.57 |
| | |
| Vinyl Acetate | 10.56 |
| Styrene | 11.87 |

The rheological character of the adhesive polymer can be partially but usefully described by the T_{g} 1 radian/second tan delta maximum temperature. It is preferable for the 1 radian/second tan delta maximum of the polymer to have a value between -45°C and 15°C, more preferably between -25°C and 0°C, and even more preferably between -20°C and -5°C.

The adhesives according to the invention having the requisite polarity and rheological properties contain 10-80 parts (more preferably 15-60 parts) of an acrylic acid ester whose homopolymer has a T_{g} less than 0°C (more preferably less than -20°C), 20-90 parts (more preferably 40-85 parts) of a nonpolar ethylenically unsaturated monomer whose homopolymer has a T_{g} greater than 15°C, 0-5 parts (more preferably 0-3 parts) of a polar ethylenically unsaturated monomer whose homopolymer has a T_{g} greater than 15°C, and one or more thermosetting resins.

The acrylic acid ester is a monofunctional acrylic ester of a monohydric alcohol having from about 4 to about 18 carbon atoms in the alcohol moiety whose homopolymer has a T_{g} less than 0°C. Included in this class of acrylic acid esters are isooctyl acrylate, 2-ethylhexyl acrylate, isononyl acrylate, isodecyl acrylate, decyl acrylate, lauryl acrylate, hexyl acrylate, butyl acrylate, and octadecyl acrylate, or combinations thereof. In the case of octadecyl acrylate, the amount is chosen such that side chain crystallization does not occur at room temperature.

The non-polar ethylenically-unsaturated monomer is a monomer whose homopolymer has a solubility parameter as measured by the Fedors method of not greater than 10.50 and a T_{g} greater than 15°C. The non-polar nature of this monomer improves the low energy and oily surface adhesion of the adhesive. It also improves the structural properties of the adhesive (e.g., cohesive strength) relative to a homopolymer of the acrylic acid ester described above. Examples of suitable non-polar monomers include 3,3,5 trimethylcyclohexyl acrylate, cyclohexyl acrylate, isobornyl acrylate, N-octyl acrylamide, t-butyl acrylate, methyl methacrylate, ethyl methacrylate, and propyl methacrylate or combinations thereof.

The adhesive may contain a limited quantity (e.g., no more than 5 parts) of a polar ethylenically unsaturated monomer whose homopolymer has a solubility parameter as measured by the Fedors method of greater than 10.50 and a T_{g} greater than 15°C to improve structural properties (e.g., cohesive strength). It is not desirable to include more than 5 parts of the polar monomer because the polar monomer impairs low energy and oily surface adhesion, and can cause gellation of the thermosetting resin in the case of acid-containing polar monomer such as acrylic acid. Examples of suitable polar monomers include acrylic acid, itaconic acid, certain substituted acrylamides such as N,N dimethylacrylamide, N-vinyl-2-pyrrolidone, N-vinyl caprolactam, acrylonitrile, tetrahydrofurfuryl acrylate, glycidyl acrylate, 2-phenoxyethylacrylate, and benzylacrylate, or combinations thereof.

The amount of thermosetting resin in the blend preferably ranges from 15-70% by weight. The resin is chosen such that it is miscible in the acrylate-containing polymer at room temperature such that macroscopic phase separation does not occur. Preferably, the adhesive is free of microscopic phase separation as well. The use of a miscible thermosetting resin enhances the properties of the adhesive (e.g., peel strength and cohesive strength).

The preferred thermosetting resin is an epoxy resin. Epoxy resins with aliphatic character are preferred because their aliphatic character is compatible with the non-polar monomers in the polymerized acrylate blend. Examples of suitable epoxy resins include hydrogenated bisphenol A epoxy resins commercially available from Shell Chemical Company under the trade name Eponex 1510. Also suitable are cycloaliphatic epoxy resins, e.g., Heloxy 69 (Rhone-Poulenc) and epoxy resins with aliphatic side chains, e.g., XB4122 (Ciba-Geigy Corp.). Low levels (e.g., up to 20% by weight) of low molecular weight purely aromatic epoxy resins may be used as well, e.g., Epon 828 commercially available from Shell Chemical Company.

A hardener is preferably added to cure the thermosetting resin under application of heat. The hardener may be of any type, but in the case of epoxy resins preferably is an amine type hardener that is selected from the group comprising dicyandiamide (preferably micronized dicyandiamide) and polyamine salts. These are available from a variety of sources, e.g., Omicure™ available from Omicron Chemical and Ajicure™ available from Ajinomoto Chemical.

Encapsulated hardeners may also be used, e.g., HX 938 available from Ciba Geigy Corporation. The use of such a hardener results in improved storage ability for tapes according to the invention.

Because there are many points in an industrial painting or metal cleaning cycle at which the adhesive may be used, the heat to which the adhesive is exposed may be insufficient to fully cure the thermosetting resin. In these cases, it may be advantageous to add an accelerator to the prepolymer blend so the resin may fully cure at a lower temperature, or may fully cure when exposed to heat for shorter periods. In the case of epoxy resins, imidazoles are particularly preferred for use as accelerators because of their ability to extend the shelf life of acrylic based materials containing uncured epoxy resin. Examples of suitable imidazoles include 2,4-diamino-6-(2'-methyl-imidazoyl)-ethyl-S-triazine isocyanurate; 2-phenyl-4-benzyl-5-hydroxymethylimidazole; and micronized hexakis (imidazole)nickel phthalate.

The monomer mixture can be polymerized by various techniques, with photoinitiated bulk polymerization being preferred. An initiator is preferably added to aid in polymerization of the monomers. The type of initiator used depends on the polymerization process. Photoinitiators which are useful for polymerizing the acrylate monomers include benzoin ethers such as benzoin methyl ether or benzoin isopropyl ether, substituted benzoin ethers such as 2-methyl-2-hydroxylpropiophenone, aromatic sulfonyl chlorides such as 2-naphthalenesulfonyl chloride, and photoactive oxides such as 1-phenyl-1, 1-propanedione-2-(o-ethoxycarbonyl)oxime. An example of a commercially available photoinitiator is Irgacure™ 651 available from Ciba-Geigy Corporation, having the formula 2,2-dimethoxy-1,2-diphenylethane-1-one). Generally, the photoinitiator is present in an amount of about 0.005 to 1 weight percent based on the weight of the monomers.

The mixture of the polymerizable monomers may also contain a crosslinking agent, or a combination of crosslinking agents, to increase the shear strength of the adhesive. Useful crosslinking agents include multifunctional alkyl acrylate monomers such as trimetholpropane triacrylate, pentaerythritol tetra-acrylate, 1,2 ethylene glycol diacrylate, 1,4 butanediol diacrylate, 1,6 hexanediol diacrylate, and 1,12 dodecanol diacrylate. Various other crosslinking agents with different molecular weights between (meth)acrylate functionality would also be useful. Generally, the crosslinker is present in an amount of about 0.005 to 1 weight percent based on the weight of the monomers.

Where a foam-like pressure sensitive adhesive tape is desired, a monomer blend containing microspheres may be used. Suitable microspheres are commercially available from from Kema Nord Plastics under the trade name "Expancel" and from Matsumoto Yushi Seiyaku under the trade name "Micropearl". When expanded the microspheres have a specific density of approximately 20-36 Kg/m³ (0.02-0.036 g/cc). It is possible to include the unexpanded microspheres in the pressure sensitive adhesive composition and subsequently heat them to cause expansion when they are appropriately processed, but it is generally preferred to mix the expanded microspheres into the adhesive. This process makes it easier to ensure that the hollow microspheres in the final adhesive are substantially surrounded by at least a thin layer of adhesive.

Polymeric microspheres having a average diameter of 10 to 200 micrometers may be blended into the polymerizable composition in amounts from about 15% to about 75% by volume prior to coating. Also useful are glass microspheres having an average diameter of from 5 to 200 micrometers, preferably from about 20 to 80 micrometers. Such microspheres may comprise 5% to 65% by volume of the pressure sensitive adhesive. Both polymeric and glass microspheres are known in the art. The pressure sensitive adhesive layer of the tape should be at least 3 times as thick as the diameter of the microspheres, preferably at least 7 times.

The pressure sensitive adhesives are also useful in vibration damping applications.

Other materials which can be blended with the polymerizable monomers prior to coating include tackifiers, plasticizers, coloring agents, reinforcing agents, fire retardants, foaming agents, thermally conductive agents, electrically conductive agents, post-curing agents, and post-curing agent curatives and their accelerators, and the like.

The pressure sensitive adhesives according to the invention are preferably prepared by photoinitiated bulk polymerization according to the technique described in Martens et al., U.S. Patent no. 4,181,752, hereby incorporated by reference. The polymerizable monomers and a photoinitiator are mixed together in the absence of solvent and partially polymerized to a viscosity in the range of from about 0.5 PaS (500 cps) to about 50 PaS (50,000 cps) to achieve a coatable syrup. Alternatively, the monomers may be mixed with a thixotropic agent such as fumed hydrophilic silica to achieve a coatable thickness. The crosslinking agent and any other ingredients (including the thermosetting resin) are then added to the prepolymerized syrup. Alternatively, with the exception of the crosslinking agent, these ingredients (including the thermosetting resin) may be added directly to monomers.

The resulting composition is coated onto a substrate (which may be transparent to ultraviolet radiation) and polymerized in an inert (i.e., oxygen free) atmosphere, e.g., a nitrogen atmosphere by exposure to ultraviolet radiation. Examples of suitable substrates include release liners (e.g., silicone release liners) and tape backings (which may be primed or unprimed paper or plastic). A sufficiently inert atmosphere can also be achieved by covering a layer of the polymerizable coating with a plastic film which is substantially transparent to ultraviolet radiation, and irradiating through that film in air as described in the aforementioned Martens et al. patent using ultraviolet lamps. Alternatively, instead of covering the polymerizable coating, an oxidizable tin compound may be added to the polymerizable syrup to increase the tolerance of the syrup to oxygen as described in U.S. Pat. No. 4,303,485 (Levens). The ultraviolet light source preferably has 90% of the emissions between 280 and 400 nm (more preferably between 300 and 400 nm), with a maximum at 351 nm.

The thermosetting resin may also be added after polymerization of the acrylate monomers.

Where multi-layer tape constructions are desirable, one method of construction is multi-layer coating using conventional techniques. For example, the coating may be applied concurrently (e.g., through a die coater), after which the entire multi-layer structure is cured all at once. The coatings may also be applied sequentially whereby each individual layer is partially or completely cured prior to application of the next layer.

The adhesives are useful in a variety of industrial applications. For example, the adhesives are useful as semi-structural post-curable adhesive transfer tapes for oily or clean surfaces, as melt sealing tapes, and as vibration damping tapes. They are particularly useful in applications where solvent resistance and/or high strength is required in the cured state.

The invention will now be further described by way of the following examples.

### EXAMPLES

### Test Procedures

Test procedures used in the examples to evaluate pressure sensitive adhesives include the following.

### Monomer Conversion Test (Test Procedure A)

The monomer conversion was determined gravimetrically. A sample of the adhesive was weighed after it was coated and subsequently dried at 120°C for three hours and then re-weighed. The percent volatiles was taken to be indicative of the monomer conversion.

### 90° Peel Test (Test Procedure B)

The pressure sensitive adhesive properties were determined using a 90° peel test. The peel test substrates were cold rolled steel (20 gauge cold plate with a mill finish).

The cold rolled steel was covered with Quaker Chemical Company (Detroit, MI) Ferricote 61 A US oil at a coating weight of 1.93 ± 0.77 g/m² (1.25 mg/in² +/- 0.5 mg/in²). The cold rolled steel was initially cleaned once with acetone before the oil was applied. Prior to application of the adhesive, an excess of mineral oil was applied to each cold rolled steel substrate with a small piece of cheese cloth and then removed to leave a coating of oil that was 1.93 ± 0.77 g/m² (1.25 ± 0.5 mg/in²).

One-half inch wide strips of the adhesive sample were carefully cut and laminated to a 127 µm (5 mil) anodized aluminum backing and then applied to the substrate of interest. The adhesive thickness ranged from 254-1016 µm (10-40 mils). The peel tests were performed at 0.3048 meters (12 inches) per minute at room temperature. The samples were rolled twice with a 2 kg roller prior to testing. The force required to remove the pressure sensitive adhesive from the oily test substrate was determined after a one minute and 24 hour dwell time. An average of two samples is reported. All values are reported in 10.94 N/m (oz/0.5 in).

### Shear Holding Test (Test Procedure C)

The shear holding power of the curable pressure sensitive adhesives of the invention was determined by applying a 0.0254-meter by 0.0127-meter (one-inch by one-half inch) sample of adhesive to a 0.0254-meter by 0.1016-meter (one-inch by four-inch) cold rolled steel coupon having a covering and type of oil described in the peel test method (Test Procedure B), and hanging the sample vertically in a 150°C oven with a 50 g load. A dwell time of 15 to 30 minutes was observed prior to hanging. The sample was placed in the oven for thirty minutes after which time it was observed to see if the applied load caused debonding. A pop-off failure is denoted "p.o." and a cohesive failure is denoted "coh".

### Overlap Shear Strength Test (Test Procedure D)

The overlap shear strength test was performed using 0.0254 meter by 0.1016 meter (one inch by four inch) cold rolled steel substrates having a covering and type of oil described in the peel test method (Test Procedure B). A 0.0254-meter by 0.0127-meter (one-inch by one-half inch) sample was applied to the test coupon such that a one-half inch overlap was achieved. The samples were cured at 150°C for thirty minutes. The samples were allowed to cool to room temperature prior to testing in an overlap shear mode at a crosshead rate of 0.0508 meters (2 inches) per minute. All values are reported in pounds per square inch (psi).

### Quick Stick Test (Test Procedure E)

The quick stick test is a qualitative measure of the ability of the curable pressure sensitive adhesive to rapidly adhere to an oily surface. The test is based on the ability to rapidly remove the release liner from the 0.0254-meter by 0.0127-meter (one-inch by one-half inch) pressure sensitive adhesive within two seconds after it has been placed on the oily surface described in the peel strength test section (Test Procedure B).

### Examples 1-25 and C1

### Example 1

100 parts by weight of iso-octyl acrylate/iso-bornyl (IBA/IOA) with a monomer ratio of 62.5/27.5, was blended with 0.04 parts of benzildimethylketal (KB-1, SARTOMER Company) photoinitiator and photopolymerized with an ultraviolet light source under constant nitrogen purge to a viscosity of about 2 PaS (2000 cps). 0.16 parts of additional benzildimethylketal photoinitiator and 0.66 parts of 25% hexanediol diacrylate (HDDA, Aldrich Chemical Company) in IOA (0.165 parts HDDA and 0.495 parts IOA) were added to the acrylate mixture.

Separately, a mixture of 100 parts of Eponex 1510 epoxy resin (Shell Chemical Company), a hydrogenated diglycidyl ether of bisphenol-A, was blended with 4.2 parts of dicyandiamide (DICY) hardener and 2.1 parts of hexakis (imidazole)nickel phthalate (NIP) until a fine dispersion was obtained. 35 parts of the epoxy mixture was then added to the above described acrylate mixture. The complete mixture was then placed on a slow turning agitator until it was well mixed.

After mixing the blend was knife-coated on a transparent polyester liner having a silicone release coating to a thickness of 482.6 to 533.4 µm (19 to 21 mils), then covered by a second transparent liner also having a silicone release coating. The coated mixture was photopolymerized using an ultraviolet light source. The average intensity of the top side and the bottom side was 19.9 W/m² (1.99 mW/cm²). The total energy was 12.39.10⁴ KJ/m² (1239 mJ/cm²). The pressure sensitive adhesive thus obtained was measured for peel strength, shear holding power, and overlap shear strength as described above.

### Comparative Example 1 (C1)

A thermosettable pressure sensitive adhesive prepared according to the invention described in the aforementioned Kitano et al. patent was prepared for comparative purposes. 100 parts by weight of butyl acrylate/N-vinyl caprolactam (BA/NVC) with a monomer ratio of 68/32, was blended with 0.04 parts of benzildimethylketal (SARTOMER Company) photoinitiator and photopolymerized with an ultraviolet light source under constant nitrogen purge to a viscosity of about 2 PaS (2000 cps). 51 parts of Epon 828 (Shell Chemical Company) and 19 parts of Epon 1001F (Shell Chemical Company) and 0.16 parts of additional benzildimethylketal photoinitiator were added to the syrup and mixed until a uniform solution was obtained. 7.5 parts of DICY, 3.2 parts NIP, and 5.6 parts of Aerosil R-972 were then mixed into the syrup using a high speed mixer.

After mixing, the blend was knife-coated to a thickness of 1016 µm (40 mils) on a transparent polyester liner having a silicone release coating, then covered by a second transparent liner also having a silicone release coating. The coated mixture was photopolymerized using an ultraviolet light source. The average intensity of the top side and the bottom side was 15 W/m² (1.50 mW/cm²). The total energy ultraviolet energy was 7.10⁴ KJ/m² (700 mJ/cm²). The pressure sensitive adhesive thus obtained was measured for percent conversion, peel strength, shear holding power, and overlap shear strength as described above.

Example 2 was prepared in the same way as Example I except the IBA/IOA ratio was 70/30, the HDDA level was 0.20 parts, and the epoxy mix was 45 parts and contained 6 parts of DICY and 3 parts of NIP.

Example 3 was prepared in the same way as Example 1 except the IBA/IOA ratio was 55/45, the HDDA level was 0.20 parts, and the epoxy mix was 45 parts and contained 2.4 parts of DICY and 1.2 parts NIP.

Example 4 was prepared in the same way as Example 2 except 0.13 parts of HDDA was used.

Example 5 was prepared in the same way as Example 4 except an IBA/IOA ratio of 55/45 was used.

Example 6 was prepared in the same way as Example 4 except 25 parts of the epoxy mix was used.

Example 7 was prepared in the same way as Example 4 except 2.4 parts of DICY and 1.2 parts of NIP were used in the epoxy mix.

Example 8 was prepared in the same way as Example 7 except 25 parts of the epoxy mix was used.

Example 9 was prepared in the same way as Example 8 except an IBA/IOA ratio of 55/45 was used.

Example 10 was prepared in the same way as Example 1 except it was coated at a thickness of 254 µm (10 mils) and the epoxy mix contained 2.4 pans DICY and 1.2 parts NIP.

Example 11 was prepared in the same way as Example 10 except the epoxy mix contained 4.0 parts DICY and 3.3 parts of toluene-diisocyanate-urea (TDIU).

Example 12 was prepared in the same was as Example 10 except the epoxy mix contained 6.0 parts DICY and 3 parts of NIP.

Example 13 was prepared in the same way as Example 11 except the epoxy mix contained 6.0 parts DICY and 5.0 parts of TDIU.

Example 14 was prepared in the same way as Example 10 except it was coated at 762 µm (30 mils).

Example 15 was prepared in the same way as Example 11 except it was coated at 762 µm (30 mils).

Example 16 was prepared in the same way as Example 12 except it was coated at 762 µm (30 mils).

Example 17 was prepared in the same way as Example 15 except the epoxy mix contained 8 parts of DICY and 6.7 parts of TDIU.

Example 18 was prepared in the same way as Example 1 except 4 parts of C15/250 glass microspheres (Minnesota Mining and Manufacturing Co., St. Paul, MN) were mixed with a high speed air mixer into the 135 parts of acrylate/epoxy blend.

Example 19 was prepared in the same way as Example 18 except 8 parts of C15/250 glass microspheres were added.

Example 20 was prepared in the same way as Example 18 except 4 parts of EXL 2691 rubber particles from Rohm and Haas Co. were added.

Example 21 was prepared in the same way as Example 18 except 8 parts of EXL 2691 rubber particles from Rohm and Haas Co. were added.

Example 22 was prepared in the same way as Example 18 except 4 parts of Aerosil R972 hydrophobic silica was added.

Example 23 was prepared in the same way as Example 18 except 8 parts of Aerosil R972 hydrophobic silica was added.

Example 24 was prepared in the same way as Example 18 except 4 parts of Cabosil M-5 hydrophilic silica was added.

Example 25 was prepared in the same way as Example 18 except 8 parts of Cabosil M-5 hydrophilic silica was added.

The data of examples 1-25 are shown in Table 2. The designation "nt" means not tested. The designation "po" means pop-off failure, while the designation "coh" means cohesive failure.

**TABLE 2**

| Example | 1 min oily peel | 24 hr. oily peel | Overlap Shear strength | Holding Power | Percent conversion |
|---|---|---|---|---|---|
| C1 | po | 0¹ | 0¹ | po | >98.5 |
| 1 | 21.3 | 61.3 | 509 | po | >98.5 |
| 2 | 19.3 | 57.1 | 1171 | po | >98.5 |
| 3 | 18.7 | 49.1 | 195 | po | >98.5 |
| 4 | 11.5 | 59.1 | 1783 | po | >98.5 |
| 5 | 18.2 | 54.1 | 395 | po | >98.5 |
| 6 | 2.5 | 14.6 | 833 | po | >98.5 |
| 7 | 13.3 | 64.6 | 742 | po | >98.5 |
| 8 | 5.6 | 28.1 | 673 | po | >98.5 |
| 9 | 17.7 | 59.6 | 214 | po | >98.5 |
| 10 | 9.6 | 45 | 338 | po | >98.5 |
| 11 | 10.1 | 42 | 552 | po | >98.5 |
| 12 | 8.6 | 43 | 931 | po | >98.5 |
| 13 | 6.7 | 40 | 1056 | po | >98.5 |
| 14 | 19.1 | 64 | 328 | po | >98.5 |
| 15 | 16.1 | 70 | 566 | po | >98.5 |
| 16 | 26.4 | 63 | 878 | po | >98.5 |
| 17 | 22.8 | 66 | 716 | po | >98.5 |
| 18 | 23.7 | 50 | 307 | po | >98.5 |
| 19 | 7.7 | 46.1 | 182 | po | >98.5 |
| 20 | 26.8 | 50.6 | 710 | po | >98.5 |
| 21 | 25.8 | 49 | 301 | po | >98.5 |
| 22 | 17.8 | 56 | 507 | po | >98.5 |
| 23 | 14.4 | 51 | 465 | po | >98.5 |
| 24 | 27.2 | 59 | 753 | po | >98.5 |
| 25 | 15.9 | 51 | 697 | po | >98.5 |

| | | | | | |
|---|---|---|---|---|---|
| ¹The lack of pressure sensitive adhesion to the oily substrate precluded bonding of the oily metal. | | | | | |

### Examples 26-34

Example 26 was prepared in the same way as Example 1 except the IBA/IOA ratio was 55/45, the HDDA level was 0.15 parts, and to the 100 parts of IOA/IBA 1 part of AA was added, and the epoxy mix contained 4 parts of DICY and 2 parts of NIP.

Example 27 was prepared in the same way as Example 26 except the IBA/IOA ratio was 62.24/37.76, and the epoxy mix contained 3 parts of DICY and 1.5 parts of NIP.

Example 28 was prepared in the same way as Example 26 except the IBA/IOA ratio was 58/42, and the epoxy mix contained 1.586 parts DICY and 0.793 parts NIP.

Example 29 was prepared in the same way as Example 26 except the IBA/IOA ratio was 61/39.

Example 30 was prepared in the same way as example 26 except the IBA/IOA ratio was 53.76/46.24 and the epoxy mix contained 3.0 parts DICY and 1.5 parts NIP.

Example 31 was prepared in the same way as Example 26 except the IBA/IOA ratio was 66/34, and the epoxy mix contained 3.2 parts DICY and 1.6 parts NIP.

Example 32 was prepared in the same way as Example 26 except the IBA/IOA ratio was 63/37, and the epoxy mix contained 4.2 parts DICY and 2.1 parts NIP.

Example 33 was prepared in the same way as Example 26 except the IBA/IOA ratio was 66/34, and the epoxy mix contained 5.2 parts DICY and 2.6 parts NIP.

Example 34 was prepared in the same way as Example 26 except the IBA/IOA ratio was 67.24/32.76 and the epoxy mix contained 4.2 parts DICY and 2.1 parts NIP.

The data of Examples 26-34 are shown in Table 3. The designation "pass" meant that the sample passed the holding power test (Test Procedure C).

**Table 3**

| Example | 1 min. oily peel | 24 hr. oily peel | Overlap Shear strength | Holding power | Percent conversion |
|---|---|---|---|---|---|
| 26 | 14 | 64 | 409 | pass | >98.5 |
| 27 | 11 | 72 | 738 | pass | >98.5 |
| 28 | 18 | 63 | 336 | pass | >98.5 |
| 29 | 20 | 71 | 956 | pass | >98.5 |
| 30 | 14 | 62 | 345 | pass | >98.5 |
| 31 | 10 | 73 | 923 | pass | >98.5 |
| 32 | 10 | 66 | 938 | pass | >98.5 |
| 33 | 6 | 69 | 1036 | pass | >98.5 |
| 34 | 9 | 82 | 1217 | pass | >98.5 |

### Examples 35-50

Example 35 was prepared in the same way as Example 1 except the IBA/IOA ratio was 60/40, the HDDA level was 0.20 parts, and the epoxy mix was 45 parts.

Example 36 was prepared in the same way as Example 35 except the epoxy mix was 65 parts.

Example 37 was prepared in the same way as Example 35 except 35 parts of epoxy mix was used and 7.5 parts of EXL 2691 rubber particles from Rohm and Haas Co. were added to the 135 parts of acrylate and epoxy mix and mixed by low speed agitation.

Example 38 was prepared in the same was as Example 37 except 15 parts of EXL 2691 rubber particles from Rohm and Haas Co. were added.

Example 39 was prepared in the same way as Example 35 except the IBA/IOA ratio was 30/70.

Example 40 was prepared in the same way as Example 36 except the IBA/IOA ratio was 30/70.

Example 41 was prepared in the same way as Example 37 except the IBA/IOA ratio was 30/70.

Example 42 was prepared in the same way as Example 38 except the IBA/IOA ratio was 30/70.

Example 43 was prepared in the same way as Example 35 except the epoxy mix contained 5.5 parts DICY and 4 parts TDIU.

Example 44 was prepared in the same way as Example 43 except 65 parts of epoxy mix was used.

Example 45 was prepared in the same way as Example 44 except the IBA/IOA ratio was 30/70.

Example 46 was prepared in the same way as Example 41 except 2 parts of Expancell was used instead of EXL 2691 rubber particles.

Example 47 was prepared in the same way as Example 46 except 3 parts of Expancell was used.

Example 48 was prepared in the same way as Example 1 except an IBA/IOA/AA ratio of 64.75/35/0.25 was used and 0.2 parts of HDDA was used.

Example 49 was prepared in the same way as Example 48 except an IBA/IOA/AA ratio of 64.5/35/0.5 was used.

Example 50 was prepared in the same way as Example 49 except an IBA/IOA/AA ratio of 63/35/2 was used.

The data of Example 35-50 are shown in Table 4. The designation "nt" means not tested. The designation "pass" means the sample passed the shear holding power test (Test Procedure C). The designation "pass (1/2)" means that one out of the the two samples tested passed the test. The designation "po" means pop-off failure.

**TABLE 4**

| Example | Oily Metal Quick Stick | Overlap Shear Strength | Holding Power | Percent Conversion |
|---|---|---|---|---|
| 35 | nt | 576 | Pass (1/2) | >98.5 |
| 36 | nt | 793 | po | >98.5 |
| 37 | nt | 567 | pass | >98.5 |
| 38 | nt | 351 | pass | >98.5 |
| 39 | nt | 773 | pass (1/2) | >98.5 |
| 40 | nt | 324 | po | >98.5 |
| 41 | nt | 722 | pass | >98.5 |
| 42 | nt | 393 | pass | > 98.5 |
| 43 | nt | 486 | pass (1/2) | >98.5 |
| 44 | nt | 742 | po | > 98.5 |
| 45 | nt | 634 | po | >98.5 |
| 46 | nt | 571 | pass (1/2) | >98.5 |
| 47 | nt | 300 | po | >98.5 |
| 48 | Excellent | 789 | po | nt |
| 49 | Excellent | 878 | pass | nt |
| 50 | Excellent | 1205 | pass | nt |

The oil used for Examples 35-47 was a machine draw oil QUF nER 61-A US.

### Examples 51-70

Example 51 was prepared in the same way as Example 26 except the IBA/IOA ratio was 65/35, the HDDA level was 0.20 parts, and to the 100 parts of IOA/IBA 1 part of glycidyl acrylate (GA) instead of AA was added, and the epoxy mix contained 4.2 parts of DICY and 2.1 parts of NIP.

Example 52 was prepared in the same way as Example 51 except 3 parts of GA were used.

Example 53 was prepared in the same way as Example 52 except 10 parts of GA were used.

Example 54 was prepared in the same way as Example 52 except 0 parts of HDDA was used.

Example 55 was prepared in the same way as Example 1 except 65 parts of IBA and 35 parts of BA were used and 0.2 parts of HDDA was used.

Example 56 was prepared in the same way as Example 55 except 35 parts of lauryl acrylate (LA) were used.

Example 57 was prepared in the same way as Example 55 except the IBA/BA ratio was 40/60 and 25 parts of Epon 828 mix was used instead of 35 parts of Eponex 1510 mix and 0 parts of HDDA were used.

Example 58 was prepared in the same way as Example 57 except the IBA/BA ratio was 55/45 and the epoxy mix was based on XB 4122 epoxy (Ciba-Geigy Corp.).

Example 59 was prepared in the same way as Example 58 except the IBA/BA ratio was 60/40 and 0.2 parts of HDDA was used.

Example 60 was prepared in the same way as Example 1 except the IBA/IOA ratio was 40/60, the HDDA was 0.2 parts, and the epoxy mix consisted of 10 parts of Epon 828 epoxy mix, 10 parts of XB 4122 epoxy mix, and 10 parts of Eponex 1510 epoxy mix.

Example 61 was prepared in the same way as Example 1 except the epoxy mix contained 8.6 parts of boron trifluoride-ethyl amine curative.

Example 62 was prepared in the same way as Example 1 except the IBA/IOA ratio was 20/80 and the HDDA level was 0.2 parts.

Example 63 was prepared in the same way as Example 62 except the IBA/IOA ratio was 50/50 and the epoxy mix was 80 parts.

Example 64 was prepared in the same way as Example 1 except the syrup was made by adding 7 parts of Cabosil M-5 as a thixotropic agent and 0 parts of HDDA.

Example 65 was prepared in the same way as Example 1 except 65 parts of 3,3,5 trimethylcyclohexyl acrylate was used in place of IBA, and 0.2 parts of HDDA was used.

Example 66 was prepared in the same way as Example 63 except 50 parts of epoxy mix was added and 25 parts of Regalrez 6108 hydrocarbon tackifier from Hercules was added to the 100 parts of acrylate.

Example 67 was prepared in the same way as Example 1 except 0 parts of HDDA and 0.05 parts of carbontetrabromide were added after the syrup was made.

Example 68 was prepared in the same way as Example 67 except 0.025 parts of carbontetrabromide was added.

Example 69 was prepared in the same way as Example 68 except 0.06 parts of HDDA was also added.

Example 70 was prepared in the same way as Example 69 except the acrylate monomer ratio was 64/35/1 IBA/IOA/AA and 0.03 parts of HDDA was added.

The data of Examples 51 - 73 is shown in Table 5. The designation "nt" means not tested.

**Table 5**

| Example | 24 hour oily metal peel | Overlap shear strength | Percent conversion |
|---|---|---|---|
| 51 | 59 | 275 | >98.5 |
| 52 | 46 | 336 | > 98.5 |
| 53 | nt | 307 | > 98.0 |
| 54 | 46 | 190 | > 98.5 |
| 55 | 51 | 477 | >98.5 |
| 56 | 42 | 247 | > 98.5 |
| 57 | 98 | 88 | >98.5 |
| 58 | 62 | 93 | > 98.5 |
| 59 | 46 | 664 | >98.5 |
| 60 | 52 | 294 | >98.5 |
| 61 | 45 | 783 | > 98.0 |
| 62 | 31 | 57 | nt |
| 63 | 27 | 85 | >98.5 |
| 64 | 51 | 248 | > 98.5 |
| 65 | 44 | 51 | >98.5 |
| 66 | 63 | 60 | >98.5 |
| 67 | 58 | 113 | >98.5 |
| 68 | 63 | 100 | >98.5 |
| 69 | 61 | 803 | >98.5 |
| 70 | 69 | 1138 | >98.5 |

Other embodiments are within the following claims.

## Claims

1. A pressure sensitive thermosetting adhesive that is the polymerization product of a blend comprising:
(a) a polymerizable monomeric or prepolymeric syrup comprising:
(i) 10-80 parts by weight of an acrylic acid ester of a monohydric alcohol whose homopolymer has a T_{g} less than 0°C;
(ii) 20-90 parts by weight of a non-polar ethylenically unsaturated monomer whose homopolymer has a solubility parameter of no greater than 10.50 and a T_{g} greater than 15°C; and
(iii) 0-5 parts by weight of a polar ethylenically unsaturated monomer whose homopolymer has a solubility parameter of greater than 10.50 and a T_{g} greater than 15°C; and
(b) one or more thermosetting resins.

2. The pressure sensitive adhesive of claim 1 wherein said thermosetting resin is miscible in the polymerization product of said acrylic acid ester said non-polar ethylenically unsaturated monomer, and said polar ethylenically unsaturated monomer.

3. The pressure sensitive adhesive of claim 1 wherein said thermosetting resin comprises an epoxy resin.

4. The pressure sensitive adhesive of claim 1 wherein said thermosetting resin comprises an epoxy resin with aliphatic character.

5. The pressure sensitive adhesive of claim 4 wherein said epoxy resin comprises a hydrogenated bisphenol A epoxy resin.

6. The pressure sensitive adhesive of claim 1 wherein the relative amounts of said acrylic acid ester, said non-polar ethylenically unsaturated monomer, and said polar ethylenically unsaturated monomer are chosen such that the 90° peel adhesion of said pressure sensitive adhesive to a surface provided with 1.93 ± 0.77 g/m² (1.25 ± 0.5 mg/in²) oil is greater than zero after a 1 minute dwell at room temperature measured according to Test Procedure B.

7. The pressure sensitive adhesive of claim 1 wherein said blend comprises from 15% to 70% by weight of said thermosetting resin.

8. The pressure sensitive adhesive of claim 1 further comprising a photoinitiator.

9. The pressure sensitive adhesive of claim 1 further comprising a heat-activatable hardener for said thermosetting resin.

10. The pressure sensitive adhesive of claim 1 further comprising a crosslinking agent.

11. The pressure sensitive adhesive of claim 1 wherein said non-polar ethylenically unsaturated monomer comprises isobornyl acrylate, N-octyl acrylamide, cyclohexylacrylate, 3,3,5 trimethylcyclohexylacrylate, or combinations thereof.

12. The pressure sensitive adhesive of claim 1 wherein said non-polar ethylenically unsaturated monomer is isobornyl acrylate.

13. The pressure sensitive adhesive of claim 1 wherein said polar ethylenically unsaturated monomer comprises acrylic acid, N-vinylcaprolactam, N-vinyl-2-pyrrolidone, or combinations thereof.

14. The pressure sensitive adhesive of claim 1 wherein said acrylic acid ester comprises isooctyl acrylate, isononyl acrylate, decyl acrylate, lauryl acrylate, butyl acrylate, ethyl hexyl acrylate, hexyl acrylate, octadecyl acrylate, or combinations thereof.

15. The pressure sensitive adhesive of claim 1 wherein said acrylic acid ester comprises isooctyl acrylate and said non-polar ethylenically unsaturated monomer comprises isobornyl acrylate.

16. The pressure sensitive adhesive of claim 15 wherein said polymerizable monomeric or prepolymeric syrup comprises from 15 to 60 parts of isooctyl acrylate and from 40 to 85 parts of isobornyl acrylate.

17. The pressure sensitive adhesive of claim I wherein said acrylic acid ester comprises lauryl acrylate and said non-polar ethylenically unsaturated monomer comprises isobornyl acrylate.

18. The pressure sensitive adhesive of claim 17 wherein said polymerizable monomeric or prepolymeric syrup comprises from 15 to 60 parts of lauryl acrylate and from 40 to 85 parts of isobornyl acrylate.

19. The pressure sensitive adhesive of claim 1 further comprising a heat expandable thermoplastic microsphere which contains a core material that expands upon heating.

20. The pressure sensitive adhesive of claim 19 wherein said core material is an organic substance which has a lower boiling point than the curing temperature of said thermosetting resin.

21. A pressure sensitive thermosetting adhesive that is the polymerization product of a blend comprising:
(a) a polymerizable monomeric or prepolymeric syrup comprising:
(i) 10-80 parts by weight of an acrylic acid ester of a monohydric alcohol whose homopolymer has a T_{g} less than 0°C;
(ii) 20-90 parts by weight of a non-polar ethylenically unsaturated monomer whose homopolymer has a solubility parameter of no greater than 10.50 and a T_{g} greater than 15°C; and
(iii) 0-5 parts by weight of a polar ethylenically unsaturated monomer whose homopolymer has a solubility parameter of greater than 10.50 and a T_{g} greater than 15°C; and
(b) one or more epoxy resins that are miscible in the polymerization product of said acrylic acid ester, said non-polar ethylenically unsaturated monomer, and said polar ethylenically unsaturated monomer,
the relative amounts of said acrylic acid ester, said non-polar ethylenically unsaturated monomer, and said polar ethylenically unsaturated monomer being chosen such that the 90° peel adhesion of said pressure sensitive adhesive to a surface provided with 1.93 ± 0.77 g/m² (1.25 ± 0.5 mg/in²) oil is greater than zero after a 1 minute dwell at room temperature as measured according to Test Procedure B.

## Patentansprüche

1. Wärmehärtbarer Haftkleber, bei dem es sich um das Polymerisationsprodukt eines Gemischs handelt, das umfaßt:
(a) einen polymerisierbaren Monomer- oder Prepolymersirup, umfassend:
(i) 10-80 Gewichtsteile eines Acrylsäureesters eines einwertigen Alkohols, dessen Homopolymer ein T_{g} von weniger als 0 °C hat;
(ii) 20-90 Gewichtsteile eines unpolaren ethylenisch ungesättigten Monomers, dessen Homopolymer einen Löslichkeitsparameter von nicht mehr als 10,50 und ein T_{g} von mehr als 15 °C hat; und
(iii) 0-5 Gewichtsteile eines polaren ethylenisch ungesättigten Monomers, dessen Homopolymer einen Löslichkeitsparameter von mehr als 10,50 und ein T_{g} von mehr als 15 °C hat; sowie
(b) ein oder mehrere warmhärtende Harze.

2. Haftkleber gemäß Anspruch 1, wobei das warmhärtende Harz mit dem Polymerisationsprodukt des Acrylsäureesters, des unpolaren ethylenisch ungesättigten Monomers und des polaren ethylenisch ungesättigten Monomers mischbar ist.

3. Haftkleber gemäß Anspruch 1, wobei das warmhärtende Harz ein Epoxidharz umfaßt.

4. Haftkleber gemäß Anspruch 1, wobei das warmhärtende Harz ein Epoxidharz mit aliphatischem Charakter umfaßt.

5. Haftkleber gemäß Anspruch 4, wobei das Epoxidharz ein hydriertes Bisphenol-A-Epoxidharz umfaßt.

6. Haftkleber gemäß Anspruch 1, wobei die relativen Mengen des Acrylsäureesters, des unpolaren ethylenisch ungesättigten Monomers und des polaren ethylenisch ungesättigten Monomers so gewählt sind, daß die nach Testverfahren B gemessene 90°-Schälfestigkeit des Haftklebers beim Haften an einer Oberfläche, die mit 1,93 ± 0,77 g/m² (1,25 ± 0,5 mg/in²) Öl versehen ist, nach 1 Minute Verweilzeit bei Raumtemperatur größer als Null ist.

7. Haftkleber gemäß Anspruch 1, wobei das Gemisch 15 bis 70 Gew.-% des warmhärtenden Harzes umfaßt.

8. Haftkleber gemäß Anspruch 1, der weiterhin einen Photoinitiator umfaßt.

9. Haftkleber gemäß Anspruch 1, der weiterhin einen wärmeaktivierbaren Härter für das warmhärtende Harz umfaßt.

10. Haftkleber gemäß Anspruch 1, der weiterhin ein Vernetzungsmittel umfaßt.

11. Haftkleber gemäß Anspruch 1, wobei das unpolare ethylenisch ungesättigte Monomer Isobornylacrylat, N-Octylacrylamid, Cyclohexylacrylat, 3,3,5-Trimethylcyclohexylacrylat oder Kombinationen davon umfaßt.

12. Haftkleber gemäß Anspruch 1, wobei es sich bei dem unpolaren ethylenisch ungesättigten Monomer um Isobornylacrylat handelt.

13. Haftkleber gemäß Anspruch 1, wobei das polare ethylenisch ungesättigte Monomer Acrylsäure, N-Vinylcaprolactam, N-Vinyl-2-pyrrolidon oder Kombinationen davon umfaßt.

14. Haftkleber gemäß Anspruch 1, wobei der Acrylsäureester Isooctylacrylat, Isononylacrylat, Decylacrylat, Laurylacrylat, Butylacrylat, Ethylhexylacrylat, Hexylacrylat, Octadecylacrylat oder Kombinationen davon umfaßt.

15. Haftkleber gemäß Anspruch 1, wobei der Acrylsäureester Isooctylacrylat umfaßt und das unpolare ethylenisch ungesättigte Monomer Isobornylacrylat umfaßt.

16. Haftkleber gemäß Anspruch 15, wobei der polymerisierbare Monomer- oder Prepolymersirup 15 bis 60 Teile Isooctylacrylat und 40 bis 85 Teile Isobornylacrylat umfaßt.

17. Haftkleber gemäß Anspruch 1, wobei der Acrylsäureester Laurylacrylat umfaßt und das unpolare ethylenisch ungesättigte Monomer Isobornylacrylat umfaßt.

18. Haftkleber gemäß Anspruch 17, wobei der polymerisierbare Monomer- oder Prepolymersirup 15 bis 60 Teile Laurylacrylat und 40 bis 85 Teile Isobornylacrylat umfaßt.

19. Haftkleber gemäß Anspruch 1, der weiterhin eine wärmeexpandierende thermoplastische Mikrokugel umfaßt, die ein Kernmaterial enthält, das sich beim Erhitzen ausdehnt.

20. Haftkleber gemäß Anspruch 19, wobei das Kernmaterial eine organische Substanz ist, deren Siedepunkt niedriger ist als die Härtetemperatur des warmhärtenden Harzes.

21. Wärmehärtbarer Haftkleber, bei dem es sich um das Polymerisationsprodukt eines Gemischs handelt, das umfaßt:
(a) einen polymerisierbaren Monomer- oder Prepolymersirup, umfassend:
(i) 10-80 Gewichtsteile eines Acrylsäureesters eines einwertigen Alkohols, dessen Homopolymer ein T_{g} von weniger als 0 °C hat;
(ii) 20-90 Gewichtsteile eines unpolaren ethylenisch ungesättigten Monomers, dessen Homopolymer einen Löslichkeitsparameter von nicht mehr als 10,50 und ein T_{g} von mehr als 15 °C hat; und
(iii) 0-5 Gewichtsteile eines polaren ethylenisch ungesättigten Monomers, dessen Homopolymer einen Löslichkeitsparameter von mehr als 10,50 und ein T_{g} von mehr als 15 °C hat; sowie
(b) ein oder mehrere Epoxidharze, die mit dem Polymerisationsprodukt des Acrylsäureesters, des unpolaren ethylenisch ungesättigten Monomers und des polaren ethylenisch ungesättigten Monomers mischbar sind,
wobei die relativen Mengen des Acrylsäureesters, des unpolaren ethylenisch ungesättigten Monomers und des polaren ethylenisch ungesättigten Monomers so gewählt sind, daß die nach Testverfahren B gemessene 90°-Schälfestigkeit des Haftklebers beim Haften an einer Oberfläche, die mit 1,93 ± 0,77 g/m² (1,25 ± 0,5 mg/in²) Öl versehen ist, nach 1 Minute Verweilzeit bei Raumtemperatur größer als Null ist.

## Revendications

1. Adhésif thermodurcissable autocollant qui est le produit de polymérisation d'un mélange comprenant:
(a) un sirop monomère ou prépolymère polymérisable comprenant:
(i) 10 à 80 parties en poids d'un ester d'acide acrylique d'un monoalcool dont l'homopolymère possède une T_{g} inférieure à 0°C;
(ii) 20 à 90 parties en poids d'un monomère éthyléniquement insaturé non polaire dont l'homopolymère possède un paramètre de solubilité ne dépassant pas 10,50 et une T_{g} supérieure à 15°C; et
(iii) 0 à 5 parties en poids d'un monomère éthyléniquement insaturé polaire dont l'homopolymère possède un paramètre de solubilité supérieur à 10,50 et une T_{g} supérieure à 15°C; et
(b) une ou plusieurs résines thermodurcissables.

2. Adhésif autocollant selon la revendication 1, dans lequel ladite résine thermodurcissable est miscible dans le produit de polymérisation dudit ester d'acide acrylique, dudit monomère éthyléniquement insaturé non polaire et dudit monomère éthyléniquement insaturé polaire.

3. Adhésif autocollant selon la revendication 1, dans lequel ladite résine thermodurcissable comprend une résine époxy.

4. Adhésif autocollant selon la revendication 1, dans lequel ladite résine thermodurcissable comprend une résine époxy avec un caractère aliphatique.

5. Adhésif autocollant selon la revendication 4, dans lequel ladite résine époxy comprend une résine époxy de bisphénol A hydrogénée.

6. Adhésif autocollant selon la revendication 1, dans lequel les quantités relatives dudit ester d'acide acrylique, dudit monomère éthyléniquement insaturé non polaire et dudit monomère éthyléniquement insaturé polaire sont choisies de sorte que la force d'adhérence dudit adhésif autocollant, lors d'un arrachement à 90°, à une surface revêtue d'huile à raison de 1,93 ± 0,77 g/m² (1,25 ± 0,5 mg/in²) est supérieure à zéro après un repos de 1 minute à la température ambiante mesurée selon le procédé d'essai B.

7. Adhésif autocollant selon la revendication 1, dans lequel ledit mélange comprend de 15% à 70% en poids de ladite résine thermodurcissable.

8. Adhésif autocollant selon la revendication 1, comprenant de plus un photoamorceur.

9. Adhésif autocollant selon la revendication 1, comprenant de plus un durcisseur activable par la chaleur pour ladite résine thermodurcissable.

10. Adhésif autocollant selon la revendication 1, comprenant de plus un agent de réticulation.

11. Adhésif autocollant selon la revendication 1, dans lequel ledit monomère éthyléniquement insaturé non polaire comprend l'acrylate d'isobornyle, le N-octylacrylamide, l'acrylate de cyclohexyle, l'acrylate de 3,3,5-triméthylcyclohexyle ou leurs combinaisons.

12. Adhésif autocollant selon la revendication 1, dans lequel ledit monomère éthyléniquement insaturé non polaire est l'acrylate d'isobornyle.

13. Adhésif autocollant selon la revendication 1, dans lequel ledit monomère éthyléniquement insaturé polaire comprend l'acide acrylique, le N-vinylcaprolactame, la N-vinyl-2-pyrrolidone ou leurs combinaisons.

14. Adhésif autocollant selon la revendication 1, dans lequel ledit ester d'acide acrylique comprend l'acrylate d'isooctyle, l'acrylate d'isononyle, l'acrylate de décyle, l'acrylate de lauryle, l'acrylate de butyle, l'acrylate d'éthylhexyle, l'acrylate d'hexyle, l'acrylate d'octadécyle ou leurs combinaisons.

15. Adhésif autocollant selon la revendication 1, dans lequel ledit ester d'acide acrylique comprend l'acrylate d'isooctyle, et ledit monomère éthyléniquement insaturé non polaire comprend l'acrylate d'isobornyle.

16. Adhésif autocollant selon la revendication 15, dans lequel ledit sirop monomère ou prépolymère polymérisable comprend de 15 à 60 parties d'acrylate d'isooctyle et de 40 à 85 parties d'acrylate d'isobornyle.

17. Adhésif autocollant selon la revendication 1, dans lequel ledit ester d'acide acrylique comprend l'acrylate de lauryle et ledit monomère éthyléniquement insaturé non polaire comprend l'acrylate d'isobornyle.

18. Adhésif autocollant selon la revendication 17, dans lequel ledit sirop monomère ou prépolymère polymérisable comprend de 15 à 60 parties d'acrylate de lauryle et de 40 à 85 parties d'acrylate d'isobornyle.

19. Adhésif autocollant selon la revendication 1, comprenant de plus une microsphère thermoplastique dilatable à la chaleur qui contient une matière de coeur qui se dilate au chauffage.

20. Adhésif autocollant selon la revendication 19, dans lequel ladite matière centrale est une substance organique qui possède un point d'ébullition inférieur à la température de durcissement de ladite résine thermodurcissable.

21. Adhésif thermodurcissable autocollant qui est le produit de polymérisation d'un mélange comprenant:
(a) un sirop monomère ou prépolymère polymérisable comprenant:
(i) 10 à 80 parties en poids d'un ester d'acide acrylique d'un monoalcool dont l'homopolymère possède une T_{g} inférieure à 0°C;
(ii) 20 à 90 parties en poids d'un monomère éthyléniquement insaturé non polaire dont l'homopolymère possède un paramètre de solubilité ne dépassant pas 10,50 et une T_{g} supérieure à 15°C; et
(iii) 0 à 5 parties en poids d'un monomère éthyléniquement insaturé polaire dont l'homopolymère possède un paramètre de solubilité supérieur à 10,50 et une T_{g} supérieure à 15°C; et
(b) une ou plusieurs résines époxy qui sont miscibles dans le produit de polymérisation dudit ester d'acide acrylique, dudit monomère éthyléniquement insaturé non polaire et dudit monomère éthyléniquement insaturé polaire;
les quantités relatives dudit ester d'acide acrylique, dudit monomère éthyléniquement insaturé non polaire et dudit monomère éthyléniquement insaturé polaire étant choisies de sorte que la force d'adhérence dudit adhésif autocollant, lors d'un arrachement à 90°, à une surface revêtue d'huile à raison de 1,93 ± 0,77 g/m² (1,25 ± 0,5 mg/in²) est supérieure à zéro après un repos de 1 minute à la température ambiante comme mesurée selon le procédé d'essai B.
